# EUROPÄISCHE PATENTSCHRIFT

(11) **EP 2 668 655 B1**
(45) Veröffentlichungstag und Bekanntmachung des Hinweises auf die Patenterteilung: **06.05.2015**
(21) Anmeldenummer: 11793721.9
(22) Anmeldetag: 29.11.2011
(51) Int. Cl.: H01F 1/057, H01F 41/26, C25D 13/02

(54) **SYNTHESE VON MAGNETISCHEN KOMPOSITEN**
SYNTHESIS OF MAGNETIC COMPOSITES
SYNTHÈSE DE COMPOSITES MAGNÉTIQUES

(30) Priorität: 26.01.2011 DE 102011003193
(43) Veröffentlichungstag der Anmeldung: 04.12.2013
(73) Patentinhaber: Robert Bosch GmbH, 70442 Stuttgart (DE)
(72) Erfinder: WILDE, Alexandra, 71272 Renningen (DE); KLEINEHAKENKAMP, Katharina, 70193 Stuttgart (DE); GAENZLE, Jochen, 70771 Leinfelden-Echterdingen (DE); RIESSEN, Jutta, 70199 Stuttgart (DE); EISELE, Ulrich, 70199 Stuttgart (DE)
(86) Internationale Anmeldenummer: PCT/EP2011/071226
(87) Internationale Veröffentlichungsnummer: WO 2012/100863

(56) Entgegenhaltungen:
- CN-A- 101 090 015
- US-A1- 2008 236 441
- ZENG H ET AL: "Exchange-coupled nanocomposite magnets by nanoparticle self-assembly", NATURE: INTERNATIONAL WEEKLY JOURNAL OF SCIENCE, NATURE PUBLISHING GROUP, UNITED KINGDOM, 28. November 2002 (2002-11-28), Seiten 395-398, XP002477917, ISSN: 0028-0836, DOI: 10.1038/NATURE01208
- ZHANG J ET AL: "Electrodeposition of Sm-Co nanoparticles from aqueous solutions", JOURNAL OF MAGNETISM AND MAGNETIC MATERIALS, ELSEVIER SCIENCE PUBLISHERS, AMSTERDAM, NL, Bd. 283, Nr. 1, 1. November 2004 (2004-11-01), Seiten 89-94, XP004597677, ISSN: 0304-8853, DOI: 10.1016/J.JMMM.2004.04.131
- ZENG Q ET AL: "Fabrication of Sm-Co/Co (Fe) composites by electroless Co and Co-Fe plating", JOURNAL OF APPLIED PHYSICS, AMERICAN INSTITUTE OF PHYSICS. NEW YORK, US, Bd. 93, Nr. 10, 15. Mai 2003 (2003-05-15), Seiten 6498-6500, XP012057867, ISSN: 0021-8979, DOI: 10.1063/1.1558246

## Beschreibung

### Stand der Technik

Permanentmagnete mit hoher Energiedichte sind in vielen technischen Bereichen von großer Bedeutung. Unter einem Permanentmagneten wird ein Magnet aus einem Stück eines magnetisierbaren Materials verstanden, der sein statisches Magnetfeld behält, ohne dass ein Stromfluss benötigt wird. Permanentmagnete können aus unterschiedlichen Materialien hergestellt werden, beispielsweise aus Stahl, Ferriten, Bismanol (Bismuth und Mangan), Aluminium-Nickel-Cobalt (AlNiCo), Samarium-Cobalt (SmCo) oder Neodym-Eisen-Bor (NdFeB). Der stärkste heute kommerziell erhältliche Permanentmagnet ist ein NdFeB-Magnet.

Eine weitere Steigerung der Energiedichte eines Magneten, also der auf das Volumen eines Magneten bezogenen magnetischen Energie, würde es ermöglichen, die Effizienz von Elektromotoren zu steigern, das Gewicht eines Magneten bei gleicher Energiedichte zu verringern und/oder den Raumbedarf für einen Magneten gleicher Energiedichte zu reduzieren. Eine Steigerung der Energiedichte von Magneten ist durch sogenannte Austauschkopplung zwischen direkt in Kontakt miteinander stehenden hartmagnetischen und weichmagnetischen Partikeln möglich (Coehorn et al.; J. Phys. Colloq. 49 (1988) C8-669; Skomski et al.; Phys. Rev. B 48 (1993) 15812). Diesen theoretischen Überlegungen zufolge ist der Effekt besonders stark, wenn sowohl hartmagnetische Partikel als auch weichmagnetische Partikel in der Größenordnung der Blochwandstärke liegen, also typischerweise nanoskalig sind.

Das Wirkprinzip austauschgekoppelter Magnete wurde zwar vor etwa 20 Jahren beschrieben, konnte aber bislang nur mit eingeschränktem Erfolg in die Praxis umgesetzt werden.

Permanentmagnete werden üblicherweise aus kristallinem Pulver hergestellt, vorzugsweise aus einkristallinem und eindomänigem Pulver. Das Pulver wird in Gegenwart eines starken Magnetfelds in eine Form gepresst. Dabei richten sich die Kristalle mit ihrer bevorzugten Magnetisierungsachse in Richtung des Magnetfelds aus. Die Presslinge werden anschließend gesintert. Bei der oberhalb von 1000 °C liegenden Sintertemperatur geht die nach außen hin wirksame Magnetisierung verloren, weil die thermische Bewegung der Atome zur weitestgehend antiparallelen Ausrichtung der Spins führt. Da die kristalline Orientierung und somit die magnetokristalline Vorzugsrichtung der Körner im Sinterverbund erhalten bleibt, kann auch die magnetische Parallelausrichtung nach dem Abkühlen der Magnete durch einen ausreichend starken Magnetisierungsimpuls wiederhergestellt werden.

Die für eine Austauschkopplung erforderliche Nanostrukturierung der Proben kann prinzipiell durch Kompaktierung von Nanopartikeln oder durch geeignete Prozessführung des Volumenmaterials im Rahmen der üblichen Herstellungsverfahren für Permanentmagnete erhalten werden. Bei der Verwendung von Nanopartikeln besteht jedoch die Schwierigkeit, diese Partikel durch herkömmliche Verfahren, beispielsweise durch Pressen, zu einem geordneten Festkörper zu kompaktieren. Unter einem geordneten Festkörper wird verstanden, dass die beiden Phasen, nämlich die hartmagnetische Phase und die weichmagnetische Phase, räumlich regelmäßig alternierend angeordnet sind, mit einer nur wenig variierenden charakteristischen Länge eines einphasigen Gebiets. Um die gewünschten hohen Energiedichten bei Magneten zu erreichen, wird ein Festkörper mit einer typischen Länge einer Phase in der Größenordnung der Blochwandstärke, z.B. von 1 bis 100 nm benötigt.

Durch Nanostrukturierung des Volumenmaterials hergestellte Proben sind aus dem Stand der Technik bekannt. Allerdings wurden bislang nur isotrope Werkstoffe beschrieben (Goll und Kronmüller; Naturwissenschaften 87 (2000) 423-438), da die Induzierung einer Vorzugsrichtung aufgrund der Glühtemperatur, die größer als die Curie-Temperatur ist, nicht möglich war. Die Energiedichten liegen bei diesen Materialien zwar über denen vergleichbarer, nicht austauschgekoppelter isotroper Werkstoffe, aber unter denen von anisotropen, nicht austauschgekoppelten Magneten wie kommerziell erhältlichen, gesinterten NdFeB-Magneten. Aus diesem Grund sind die bislang durch Nanostrukturierung erhältlichen Magnete aus technischer sowie aus wirtschaftlicher Sicht nur von begrenzter Relevanz.

In der CN-1085963 A wird ein Verfahren zur elektrophoretischen Beschichtung der Oberfläche einer negativen Elektrode aus NdFeB-magnetischem Material beschrieben, bei dem öliger Schmutz und Klebstoff durch Kochen entfernt wird, bevor das Material mit einer anionischen elektrophoretischen Abscheidung versehen wird.

Mit der CN-101013628 A wird ein Verfahren zum Schutz von porösen Magneten und zum Versiegeln mittels Kathodenelektrophorese offenbart. Auch mit der CN-1619718 A wird ein Verfahren der Kathodenelektrophorese mit einem gebundenem NdFeB Magnet beschrieben.

### Offenbarung der Erfindung

Bei der Elektrophorese werden Partikel, die an ihrer Oberfläche eine elektrische Ladung aufweisen, im elektrischen Feld in einer dielektrischen Flüssigkeit an einer Elektrode abgeschieden. Bei perfekter Dispergierung der Partikel behalten sie ihren dispersen Status bis zu ihrer Abscheidung bei. Dadurch können sie bei ihrer Abscheidung einen energetisch günstigen Platz finden, das heißt in einer Lücke der bereits abgeschiedenen Teilchen. Die Konsolidierung der Partikel wird bei der Elektrophorese (im Gegensatz zu den meisten anderen Formgebungsverfahren) nicht durch lokale Reibung bestimmt, die zu einem schlecht und ungeordnet gepackten Körper führen würde.

Bei der Elektrophorese ist die Geschwindigkeit der Abscheidung unabhängig von der Größe der Teilchen. Damit ist die Elektrophorese das einzige pulvermetallurgische Formgebungsverfahren, bei dem die Geschwindigkeit der Konsolidierung unabhängig von der Teilchengröße ist. Daher ist die Elektrophorese prädestiniert für die Verarbeitung nanoskaliger Pulver. Durch eine elektrophoretische Abscheidung von Partikeln aus einer Suspension kann eine geordnete Anordnung der Teilchen erfolgen. Insbesondere bei einer elektrophoretischen Abscheidung von nanoskaligen Partikeln aus einer Suspension ermöglicht die geordnete Anordnung der nanoskaligen Partikel die Herstellung eines nanoskalig geordneten Körpers durch eine nachfolgende Sinterverdichtung .

Bei einem geordneten Körper, der mit dem erfindungsgemäßen Verfahren hergestellt werden kann, werden eine hartmagnetische Phase und eine weichmagnetische Phase, jeweils in Form von Partikeln vorliegend, zu einem Festkörper verbunden, d. h. einem Komposit, der räumlich regelmäßig angeordnete Phasen charakteristischer Länge aufweist. Bei Verwendung nanoskaliger Partikel für die hartmagnetische Phase und die weichmagnetische Phase können mit dem erfindungsgemäßen Verfahren nanoskalig geordnete Körper hergestellt werden.

Durch geeignete Verfahrensmodifikationen kann auch eine Texturierung oder eine Anisotropie des Festkörpers erzielt werden, beispielsweise durch Anlegen eines äußeren Magnetfeldes, durch die Verwendung von anisotropen Partikeln beziehungsweise von Partikeln mit einer besonderen Form und/oder besondere Strömungsverhältnisse in der Elektrophoresekammer und/oder durch spezielle Anordnungen der Elektroden.

Gegenstand der vorliegenden Erfindung ist ein Verfahren zur Herstellung magnetischer Komposite, umfassend das elektrophoretische Abscheiden hartmagnetischer Partikel und weichmagnetischer Partikel aus einer Suspension an einer Elektrode. Die Abscheidung erfolgt mit Hilfe eines geeigneten elektrischen Feldes zwischen typischerweise zwei Elektroden, wobei die Abscheidung der Partikel bevorzugt an einer Elektrode stattfindet. Mit diesem Verfahren lassen sich besonders gleichmäßig geordnete Komposite herstellen.

Bei einer besonders bevorzugten Ausführungsform des Verfahrens sind die hartmagnetischen Partikel und die weichmagnetischen Partikel nanoskalig. Durch die Verwendung nanoskaliger Partikel können besonders gleichmäßig geordnete Nanokomposite hergestellt werden, die zu Permanentmagneten, vorzugsweise zu Permanentmagneten mit hoher Energiedichte, weiterverarbeitet werden können.

Die hartmagnetischen Partikel und die weichmagnetischen Partikel sind vorzugsweise aus der Gruppe ausgewählt, die metallische Werkstoffe, intermetallische Verbindungen und oxidische Werkstoffe umfasst. Oxidische Werkstoffe sind beispielsweise Ferrite. Ferrite sind elektrisch schlecht oder nicht leitende ferrimagnetische keramische Werkstoffe, bestehend aus einer Verbindung aus Eisenoxid, Nickel-, Zink-, Mangan- Barium-, Strontium- und/oder anderen Metalloxiden, wobei die Verbindung durch die allgemeine Formel AB₂O₄ repräsentiert wird, bei der A = Fe(II), Ni, Zn, Mn, Ba, Sr, etc. und B = Fe(III). Man unterscheidet weichmagnetische Ferrite und hartmagnetische Ferrite. Hartmagnetische Ferrite enthalten zusätzlich zum Eisenoxid Barium und/oder Strontium, und werden durch Kalzination aus Eisen(III)-oxid und Bariumcarbonat beziehungsweise Strontiumcarbonat hergestellt. Weichmagnetische Ferrite werden durch Zusatz von Nickel, Zink und/oder Mangan-Verbindungen hergestellt.

Bei einer weitere oder zusätzlichen Ausführungsform des erfindungsgemäßen Verfahrens weisen die hartmagnetischen Partikel und/oder die weichmagnetischen Partikel eine Anisotropie auf. Anisotropie bezeichnet die Richtungsabhängigkeit einer Eigenschaft oder eines Vorgangs. Durch die Verwendung von Partikeln, die eine Anisotropie aufweisen, kann eine gerichtete Anordnung dieser Partikel in dem Komposit erreicht werden.

Als Ausgangsmaterial für das erfindungsgemäße Verfahren wird eine Suspension verwendet, die die gewünschten Partikel in gewünschtem Mengenverhältnis und in einem geeigneten Feststoffgehalt in einem geeigneten Suspendiermittel umfasst.

Geeignete Werkstoffe für die weichmagnetischen Partikel können aus der Gruppe ausgewählt sein, die Eisen, Legierungen auf Basis von Eisen, Eisencarbide, Nickel und Cobalt, Weichferrite wie NiZn oder MnZn umfasst.

Geeignete Werkstoffe für die hartmagnetischen Partikel können aus der Gruppe ausgewählt sein, die Cobalt-Samarium (SmCo₅, Sm₂Co₁₇, Sm(Co, Cu, Fe, Zr)_{z}), Neodym-Eisen-Bor (NdFeB), AlNiCo-Legierungen, Hartferrite auf Basis von Barium, Hartferrite auf Basis von Strontium, PtCo-Legierungen, CuNiFe-Legierungen, CuNiCo-Legierungen, FeCoCr-Legierungen, martensitische Stähle und MnAIC-Legierungen umfasst.

Grundsätzlich ist es möglich, Partikel aus unterschiedlichen weichmagnetischen Werkstoffen mit Partikeln aus unterschiedlichen hartmagnetischen Werkstoffen miteinander zu mischen und als eines der Ausgangsmaterialien für das erfindungsgemäße elektrophoretische Verfahren einzusetzen. Besonders bevorzugt wird eine Kombination aus nanoskaligem NdFeB als hartmagnetische Partikel und nanoskaligem Fe als weichmagnetische Partikel verwendet.

Die Größe der nanoskaligen Partikel beträgt 1 bis 100 nm, vorzugsweise 10 bis 60 nm, besonders bevorzugt 20 bis 40 nm.

In einer bevorzugten Ausführungsform beträgt der Feststoffgehalt der Suspension 5 bis 30 Vol.-%, besonders bevorzugt 10 bis 20 Vol.-%.

Für das Verfahren geeignete Suspendiermittel sind wasserfreie organische Lösungsmittel mit entsprechender relativer Permittivität ("Dielektrizitätskonstante") von ca. 5-70. Unter wasserfreien organischen Lösungsmitteln werden im Sinne der Erfindung auch quasi-wasserfreie organische Lösungsmittel verstanden. Quasi-wasserfreie organische Lösungsmittel sind organische Lösungsmittel mit einem Wassergehalt von weniger als 0,5 Gew.-%, vorzugsweise von weniger als 0,2 Gew.-%. Besonders bevorzugte Suspendiermittel sind aus der Gruppe ausgewählt, die Isopropanol, n-Butanol, 1-Methoxy-2-propanol und Aceton umfasst und eine relative Permittivität von 10-25 aufweist.

Die elektrophoretische Abscheidung der Partikel, insbesondere der nanoskaligen Partikel, aus der Suspension an die Elektrode erfolgt bei nominellen elektrischen Feldstärken von 10 bis 10⁷ V/m. Vorzugsweise erfolgt die elektrophoretische Abscheidung der Partikel, insbesondere der nanoskaligen Partikel, aus der Suspension bei nominellen elektrischen Feldstärken von 1.000 bis 10.000 V/m. Die Stromdichte liegt bevorzugt zwischen 0,01 und 5.000 A/m², besonders bevorzugt zwischen 1 und 50 A/m².

Bei besonderen Ausführungsformen des erfindungsgemäßen Verfahrens weist die Suspension der Partikel mindestens einen Zusatz auf, der vorzugsweise aus der Gruppe ausgewählt ist, die polymere Binder und Dispergatoren umfasst. Geeignete polymere Binder können aus der Gruppe der Acrylatbinder ausgewählt sein, vorzugsweise aus der Gruppe der Methacrylate mittleren Molekulargewichts. Besonders bevorzugte polymere Binder aus der Gruppe der Methacrylate mittleren Molekulargewichts sind in der nachfolgenden Tabelle aufgeführt und kommerziell beispielsweise unter dem Handelsnamen ELVACYTE von der Fa. Lucite International, Cordova, TN, USA erhältlich.

**Tabelle 1: Übersicht über besonders bevorzugte polymere Binder. Die inhärente Viskosität wurde anhand einer Lösung aus 0,25 g polymerem Binder in 50 ml Methylenchlorid bei 20°C mittels eines Nr. 50 Cannon-Fenske Viskosimeters gemessen.**

| | Elvacyte 2009® | Elvacyte 2014® | Elvacyte 2045® |
|---|---|---|---|
| Polymer | Methylmethacrylat | Methylmethacrylat | Isobutylmethacrylat |
| Molekulargewicht | 81.000 | 119.000 | 193.000 |
| Glasübergangstemperatur | 87°C | 41°C | 50°C |
| Inhärente Viskosität | 0,369-0,415 | 0,370-0,430 | 0,590-0,680 |
| Säurezahl | 0 | 13 | 0 |

Geeignete Dispergatoren können aus der Gruppe ausgewählt sein, die Trioxadecansäure (TODS) und Polyisobutylsuccinimid umfasst.

Durch die Zusätze in der Suspension kann die Abscheidung und die Morphologie der Abscheidung modifiziert werden.

Bei einer anderen oder zusätzlichen Ausführungsform wird während der elektrophoretischen Abscheidung der nanoskaligen Partikel ein Magnetfeld in der Elektrophoresekammer aufrecht erhalten. Dadurch kann eine Texturierung der Abscheidung erzeugt werden.

Bei einer weiteren oder zusätzlichen Ausführungsform des erfindungsgemäßen Verfahrens wird die Abscheidung, also die an der Elektrode abgeschiedenen Partikel, in einer geschlossenen Lösemittelatmosphäre getrocknet. Vorzugsweise ist das Lösemittel der Lösemittelatmosphäre dasselbe Lösungsmittel wie das Suspendiermittel, das für die elektrophoretische Abscheidung der Partikel verwendet wurde. Durch die Trocknung der Abscheidung in einer geschlossenen Lösemittelatmosphäre werden Trocknungsrisse in der Abscheidung vermieden. Mit dem erfindungsgemäßen Verfahren lassen sich Permanentmagnete mit hoher Energiedichte herstellen.

## Patentansprüche

1. Verfahren zur Herstellung magnetischer Komposite, umfassend das elektrophoretische Abscheiden hartmagnetischer Partikel und weichmagnetischer Partikel an einer Elektrode.

2. Verfahren gemäß Anspruch 1, **dadurch gekennzeichnet, dass** die hartmagnetischen Partikel und die weichmagnetischen Partikel nanoskalig sind.

3. Verfahren gemäß Anspruch 1 oder 2, **dadurch gekennzeichnet, dass** die hartmagnetischen Partikel und/oder weichmagnetischen Partikel aus der Gruppe ausgewählt sind, die metallische Werkstoffe, intermetallische Verbindungen und oxidische Werkstoffe umfasst.

4. Verfahren gemäß einem der vorhergehenden Ansprüche, **dadurch gekennzeichnet, dass** die hartmagnetischen Partikel und/oder die weichmagnetischen Partikel eine Anisotropie aufweisen.

5. Verfahren gemäß einem der Ansprüche 1 bis 4, **dadurch gekennzeichnet, dass** die Werkstoffe für die weichmagnetischen Partikel aus der Gruppe ausgewählt sind, die Eisen, Legierungen auf Basis von Eisen, Nickel und Cobalt, Weichferrite wie NiZn oder MnZn umfasst.

6. Verfahren gemäß einem der Ansprüche 1 bis 4, **dadurch gekennzeichnet, dass** die Werkstoffe für die hartmagnetischen Partikel aus der Gruppe ausgewählt sind, die Cobalt-Samarium (SmCo₅, Sm₂Co₁₇, Sm(Co, Cu, Fe, Zr)_{z}), Neodym-Eisen-Bor (NdFeB), AlNiCo-Legierungen, Hartferrite auf Basis von Barium, Hartferrite auf Basis von Strontium, PtCo-Legierungen, CuNiFe-Legierungen, CuNiCo-Legierungen, FeCoCr-Legierungen, martensitische Stähle und MnAlC-Legierungen umfasst.

7. Verfahren gemäß einem der Ansprüche 2 bis 6, **dadurch gekennzeichnet, dass** die Größe der nanoskaligen Partikel 1 bis 100 nm, bevorzugt 10 bis 60 nm beträgt, besonders bevorzugt 20 bis 40 nm.

8. Verfahren gemäß einem der vorhergehenden Ansprüche, **dadurch gekennzeichnet, dass** der Feststoffgehalt der Suspension 5 bis 30 Vol.-% beträgt, besonders bevorzugt 10 bis 20 Vol.-%.

9. Verfahren gemäß einem der vorhergehenden Ansprüche, **dadurch gekennzeichnet, dass** das Suspendiermittel ein wasserfreies organisches Lösungsmittel ist, vorzugsweise aus der Gruppe ausgewählt, die Isopropanol, Butanol, 1-Methoxy-2-propanol und Aceton umfasst.

10. Verfahren gemäß einem der vorhergehenden Ansprüche, **dadurch gekennzeichnet, dass** die elektrophoretische Abscheidung der nanoskaligen Partikel bei einer Feldsträke von bis zu 10⁷ V/m erfolgt, vorzugsweise bei einer nominellen elektrischen Feldstärken zwischen 1.000 und 10.000 V/m.

11. Verfahren gemäß einem der vorhergehenden Ansprüche, **dadurch gekennzeichnet, dass** die elektrophoretische Abscheidung der nanoskaligen Partikel bei einer Stromdichte zwischen 0,01 und 5.000 A/m² erfolgt, vorzugsweise bei einer Stromdichte zwischen 1 und 50 A/m².

12. Verfahren gemäß einem der vorhergehenden Ansprüche, **dadurch gekennzeichnet, dass** die Suspension mindestens einen Zusatz aufweist, der vorzugsweise aus der Gruppe ausgewählt ist, die polymere Binder und Dispergatoren umfasst.

13. Verfahren gemäß einem der vorhergehenden Ansprüche, **dadurch gekennzeichnet, dass** während der elektrophoretischen Abscheidung der nanoskaligen Partikel ein Magnetfeld in der Elektrophoresekammer aufrecht erhalten wird.

14. Verfahren gemäß einem der vorhergehenden Ansprüche, **dadurch gekennzeichnet, dass** die Abscheidung aus nanoskaligen Partikeln, in einer geschlossenen Lösemittelatmosphäre getrocknet wird, vorzugsweise in einer geschlossenen Lösemittelatmosphäre, bei der das Lösemittel mit dem Suspendiermittel für die Suspension identisch ist.

## Claims

1. Process for producing magnetic composites, which comprises electrophoretic deposition of hard-magnetic particles and soft-magnetic particles on an electrode.

2. Process according to Claim 1, **characterized in that** the hard-magnetic particles and the soft-magnetic particles are nanosize.

3. Process according to Claim 1 or 2, **characterized in that** the hard-magnetic particles and/or soft-magnetic particles are selected from the group consisting of metallic materials, intermetallic compounds and oxidic materials.

4. Process according to any of the preceding claims, **characterized in that** the hard-magnetic particles and/or the soft-magnetic particles display anisotropy.

5. Process according to any of Claims 1 to 4, **characterized in that** the materials for the soft-magnetic particles are selected from the group consisting of iron, alloys based on iron, nickel and cobalt, soft ferrites such as NiZn or MnZn.

6. Process according to any of Claims 1 to 4, **characterized in that** the materials for the hard-magnetic particles are selected from the group consisting of cobalt-samarium (SmCo₅, Sm₂Co₁₇, Sm(Co, Cu, Fe, Zr)_{z}), neodymium-iron-boron (NdFeB), AlNiCo alloys, hard ferrites based on barium, hard ferrites based on strontium, PtCo alloys, CuNiFe alloys, CuNiCo alloys, FeCoCr alloys, martensitic steels and MnAlC alloys.

7. Process according to any of Claims 2 to 6, **characterized in that** the size of the nanosize particles is from 1 to 100 nm, preferably from 10 to 60 nm, particularly preferably from 20 to 40 nm.

8. Process according to any of the preceding claims, **characterized in that** the solids content of the suspension is from 5 to 30% by volume, particularly preferably from 10 to 20% by volume.

9. Process according to any of the preceding claims, **characterized in that** the suspension medium is a water-free organic solvent, preferably selected from the group consisting of isopropanol, butanol, 1-methoxy-2-propanol and acetone.

10. Process according to any of the preceding claims, **characterized in that** the electrophoretic deposition of the nanosize particles is carried out at a field strength of up to 10⁷ V/m, preferably at a nominal electric field strength in the range from 1000 to 10 000 V/m.

11. Process according to any of the preceding claims, **characterized in that** the electrophoretic deposition of the nanosize particles is carried out at a current density in the range from 0.01 to 5000 A/m², preferably at a current density in the range from 1 to 50 A/m².

12. Process according to any of the preceding claims, **characterized in that** the suspension comprises at least one additive which is preferably selected from the group consisting of polymeric binders and dispersants.

13. Process according to any of the preceding claims, **characterized in that** a magnetic field is maintained in the electrophoresis chamber during the electrophoretic deposition of the nanosize particles.

14. Process according to any of the preceding claims, **characterized in that** the deposit composed of nanosize particles is dried in a closed solvent atmosphere, preferably in a closed solvent atmosphere in which the solvent is identical to the suspension medium for the suspension.

## Revendications

1. Procédé de fabrication de composites magnétiques, le procédé comprenant le dépôt par électrophorèse de particules magnétiques dures et de particules magnétiques douces sur une électrode.

2. Procédé selon la revendication 1, **caractérisé en ce que** les particules magnétiques dures et les particules magnétiques douces sont de taille nanométrique.

3. Procédé selon les revendications 1 ou 2, **caractérisé en ce que** les particules magnétiques dures et/ou les particules magnétiques douces sont sélectionnées dans l'ensemble qui comporte les matériaux métalliques, les composés intermétalliques et les matériaux oxydés.

4. Procédé selon l'une des revendications précédentes, **caractérisé en ce que** les particules magnétiques dures et/ou les particules magnétiques douces présentent une anisotropie.

5. Procédé selon l'une des revendications 1 à 4, **caractérisé en ce que** les matériaux utilisés pour les particules magnétiques douces sont sélectionnés dans l'ensemble qui comporte le fer, les alliages à base de fer, le nickel, le cobalt et les ferrites douces telles que NiZn ou MnZn.

6. Procédé selon l'une des revendications 1 à 4, **caractérisé en ce que** les matériaux utilisés pour les particules magnétiques dures sont sélectionnées dans l'ensemble qui comporte le cobalt-samarium (SmCo₅, Sm₂Co₁₇, Sm(Co, Cu, Fe, Zr)_{z}), le néodyme-fer-bore (NdFeB), les alliages d'AlNiCo, les ferrites dures à base de baryum, les ferrites dures à base de strontium, les alliages de PtCo, les alliages de CuNiFe, les alliages de CuNiCo, les alliages de FeCoCr, les aciers martensitiques et les alliages de MnAlC.

7. Procédé selon l'une des revendications 2 à 6, **caractérisé en ce que** la taille des particules nanométriques est comprise entre 1 et 100 nm, de préférence entre 10 et 60 nm et de façon plus particulièrement préférable de 20 à 40 nm.

8. Procédé selon l'une des revendications précédentes, **caractérisé en ce que en ce que** la teneur en solides de la suspension est comprise entre 5 et 30 % en volume et de façon particulièrement préférable entre 10 et 20 % en volume.

9. Procédé selon l'une des revendications précédentes, **caractérisé en ce que en ce que** l'agent de mise en suspension est un solvant organique exempt d'eau, de préférence sélectionné dans l'ensemble qui comporte l'isopropanol, le butanol, le 1-méthoxy-2-propanol et l'acétone.

10. Procédé selon l'une des revendications précédentes, **caractérisé en ce que en ce que** le dépôt par électrophorèse des particules nanométriques s'effectue dans un champ d'une intensité qui peut atteindre 10⁷ V/m et de préférence dans un champ électrique d'une intensité nominale comprise entre 1 000 et 10 000 V/m.

11. Procédé selon l'une des revendications précédentes, **caractérisé en ce que en ce que** le dépôt par électrophorèse des particules nanométriques s'effectue à une densité de courant comprise entre 0,01 et 5 000 A/m² et de préférence à une densité de courant comprise entre 1 et 50 A/m².

12. Procédé selon l'une des revendications précédentes, **caractérisé en ce que en ce que** la suspension présente au moins un additif qui est de préférence sélectionné dans l'ensemble qui comporte les liants polymères et les dispersants.

13. Procédé selon l'une des revendications précédentes, **caractérisé en ce que en ce que** pendant le dépôt par électrophorèse des particules nanométriques, un champ magnétique est maintenu dans la chambre d'électrophorèse.

14. Procédé selon l'une des revendications précédentes, **caractérisé en ce que en ce que** le dépôt constitué de particules nanométriques est séché dans une atmosphère fermée de solvant, de préférence dans une atmosphère fermée de solvant dont le solvant est identique à l'agent de mise en suspension de la suspension.
